Europäisches Patentamt

European Patent Office

Office européen des brevets

(19)

(11) Numéro de publication: **0 038 791**
**B1**

(12) # FASCICULE DE BREVET EUROPEEN

(45) Date de publication du fascicule du brevet:
11.01.84

(21) Numéro de dépôt: 81870019.7

(22) Date de dépôt: 02.04.81

(51) Int. Cl.³: **B 23 K 9/23**, B 23 K 9/235,
B 23 K 35/00

(54) **Procédé pour souder un objet en aluminium à un objet en acier inoxydable.**

(30) Priorité: 18.04.80 FR 8008752

(43) Date de publication de la demande:
28.10.81 Bulletin 81/43

(45) Mention de la délivrance du brevet:
11.01.84 Bulletin 84/2

(84) Etats contractants désignés:
CH DE GB IT LI NL SE

(56) Documents cités:
BE - A - 525 048
DE - A - 1 552 961
DE - A - 1 808 013
FR - A - 1 323 284
GB - A - 799 336
GB - A - 1 180 964
US - A - 2 977 675

(73) Titulaire: **AGENCE SPATIALE EUROPEENNE, 8-10, rue Mario Nikis, F-75738 Paris Cedex 15 (FR)**

(72) Inventeur: **Aarts, Kornelis Jacob, Abraham Ratemakerstraat 61, Noordwijk (NL)**

(74) Mandataire: **Vanderperre, Robert et al, Bureau VANDER HAEGHEN 63 Avenue de la Toison d'Or, B-1060 Bruxelles (BE)**

## Procédé pour souder un objet en aluminium à un objet en acier inoxydable

La présente invention concerne un procédé de connexion simple et économique qui trouve une application particulière notamment pour la connexion de tuyaux sur les engins spatiaux. C'est donc en considérant cette application particulière que l'invention est exposée dans ce qui suit.

On connaît un procédé de connexion par soudage d'un objet en cuivre à un objet en aluminium (FR-A-1 323 284) selon lequel l'objet en cuive est d'abord revêtu d'une couche d'argent, puis soudée de manière classique à l'aluminium en utilisant des électrodes en aluminium. Cette invention ne résout donc pas le problème de connexion entre un objet en aluminium et un objet en acier inoxydable.

On connaît également un procédé pour connecter un objet en aluminium à un objet en acier (DE-A-1 808 013) selon lequel l'acier est d'abord zingué et ensuite connecté à l'aluminium par soudage à l'arc électrique. Ce procédé donne des résultats qui sont satisfaisants pour la réalisation des assemblages structuraux composés de pièces en aluminium et en acier mais qui sont insuffisants pour les applications où l'étanchéité et la résistance aux températures cryogéniques est impérative. De plus, ce procédé fait appel au zingage complexe par immersion.

Un besoin s'est donc fait sentir de disposer d'un procédé simple et peu coûteux pour connecter un tuyau d'aluminium à un tuyau d'acier inoxydable de telle manière que la connexion réalisée soit étanche et capable de résister aux températures cryogéniques.

L'objet de la présente invention est un procédé de soudage qui permet de réaliser une telle connexion étanche et résistant aux températures cryogéniques entre un objet en aluminium et un objet en acier inoxydable.

Suivant l'invention, on projette d'abord sur la surface de l'objet en acier inoxydable qui doit être soudée, un mélange pulvérulent d'une quantité prépondérante d'un métal ayant un point de fusion élevé tel que celui du nickel p. ex-, et d'une faible quantité d'aluminium pour former une même pellicule. On projette ensuite sur la surface de cette pellicule une couche d'aluminium très pur, puis on soude l'objet en aluminium à la surface revêtue de l'objet en acier inoxydable en utilisant de l'aluminium très pur comme matière de remplissage.

Le procédé selon l'invention est exposé dans ce qui suit en se référant aux dessins ci-annexés sur lesquels:

— la figure 1 montre une vue avec coupe partielle de l'extrémité d'un tuyau en acier inoxydable, préparée selon l'invention pour y connecter un tuyau d'aluminium;

— la figure 2 montre la connexion d'un tuyau d'aluminium sur l'extrémité du tuyau de la digure 1.

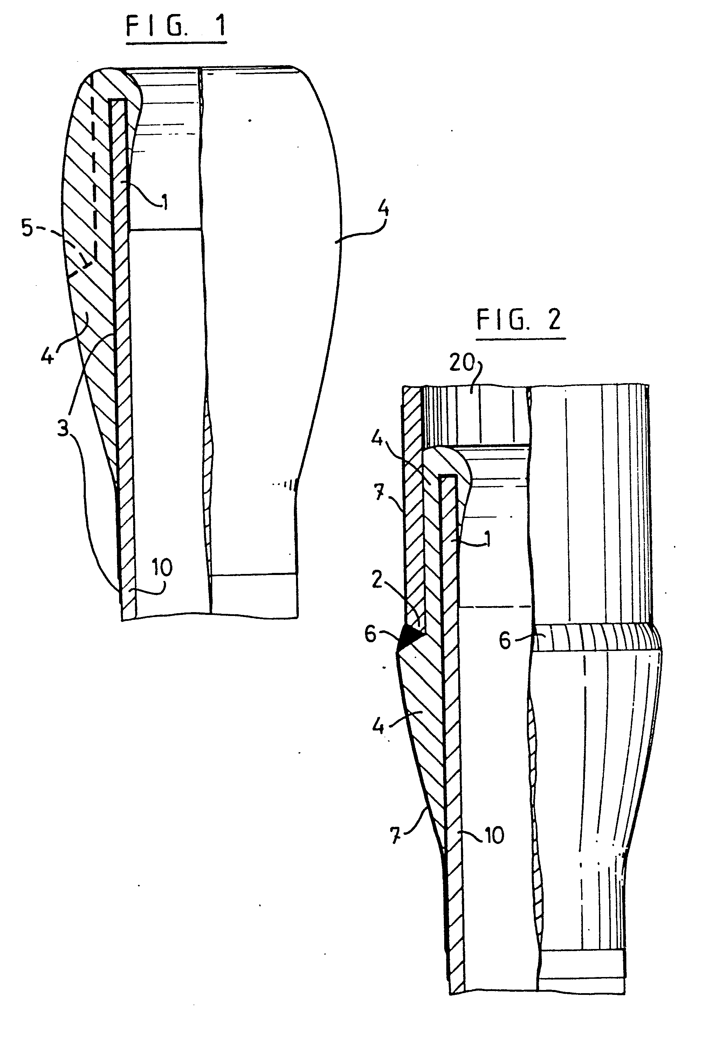

Se référant à la figure 1 on voit une partie d'un tuyau en acier inoxydable 10 sur l'extrémité 1 duquel doit être connecté un tuyau d'aluminium. Conformément à l'invention, la surface de l'extrémité 1 du tuyau 10 est revêtue d'une mince pellicule 3 formée en pulvérisant à la flamme un mélange pulvérulent d'aluminium et d'un métal ayant un point de fusion élevé, par exemple du nickel. Dans un exemple de réralisation, on a utilisé avec satisfaction un mélange vendu par la firme METCO Inc. sous le nom METCO 450 et contenant 95,5% de nickel et 4,5% d'aluminium, et l'on a formé une pellicule d'environ 80 microns d'épaisseur. Sur la pellicule 3 est ensuite projetée, par pulvérisation à la flamme, une couche 4 d'aluminium très pur ayant par exemple une épaisseur d'environ 4 mm. Dans l'exemple décrit on a utilisé une poudre de particules sphériques d'aluminium ayant une pureté d'environ 99,8%. Dans le cas de l'application décrite ici à titre d'exemple, la couche 4 a été usinée sur une certaine hauteur (comme indiqué en tratit interrompu) pour former un bord annulaire extérieur 5. L'extrémité revêtue 1 du tuyau 10 a ensuite été introduite dans le tuyau d'aluminium 20 jusqu'à ce que le bord 2 de celui-ci vienne contre le bord 5 et le joint formé est ensuite rempli à l'aide d'aluminium très pur 6 (par exemple de l'aluminium ayant une pureté de 99,5%). Pour la pulvérisation des matières 3 et 4 on utilise avantageusement un mélange de plasma contenant une partie d'hydrogène pour dix parties d'azote.

Des essais effectués sur la soudure réalisée ont montré que la liaison réalisée suivant l'invention est satisfaisante. Les essais au détecteur de fuite Edwards ont indiqué une lecture meilleure que $2,1 \times 10^{-8}$ Torr · l/s, montrant ainsi l'excellente étanchéité de la liaison. D'autre part, après avoir soumis la liaison à des cycles thermiques répétés s'étendant de $+70°$ à $-150°$C on n'a constaté dans la soudure ni fracture, ni aucun autre défaut.

Le procédé suivant l'invention peut se terminer par un dépôt électrolytique d'une mince pellicule de nickel 7 sur la zone de soudure des deux objets.

**Revendications**

1. Procédé pour souder un objet en aluminium à un objet en acier inoxydable comprenant les phases suivantes:
projection sur la surface (1) de l'objet en acier inoxydable qui doit être soudé, d'un mélange pulvérulent comprenant une quantité prépondérante d'un métal ayant un point de fusion élevé tel que celui du nickel p. ex. et une faible quantité d'aluminium pour former une mince pellicule (3);

projection sur la surface de ladite pellicule (3) d'une couche d'aluminium très pur (4); et soudage de l'objet en aluminium (2) à la surface de la couche d'aluminium (4) formée sur l'objet en acier inoxydable en utilisant de l'aluminium très pur (6) comme matière de remplissage.

2. Procédé selon la revendication 1, dans lequel les phases de projection utilisent un mélange de plasma gazeux contenant une partie d'hydrogène pour dix parties d'azote.

3. Procédé selon la revendication 1, dans lequel le mélange pulvérulent contient de l'aluminium et du nickel.

4. Procédé selon l'une quelconque des revendications 1 à 3, caractérisé en ce qu'il comprend en outre la phase de dépôt électrolytique d'une mince pellicule de nickel (7) sur la zone de soudre des deux objets.

## Patentansprüche

1. Verfahren zum Anschweißen eines Werkstücks aus Aluminium an ein Werkstück aus nichtrostendem Stahl, umfassend die folgenden Phasen:
Aufspritzen eines Pulvergemisches, das eine überwiegende Menge eines Metalls mit einem hohem Schmelzpunkt, z. B. dem des Nickels, und eine geringe Aluminiummenge enthält, auf die Oberfläche (1) des zu verschweißenden Werkstücks aus nichtrostendem Stahl zur Bildung eines dünnen Überzuges (3);
Aufspritzen einer Schicht von sehr reinem Aluminium (4) auf die Oberfläche des genannten Überzuges (3) und
Verschweißen des Werkstücks aus Aluminium (2) mit der Oberfläche der Aluminiumschicht (4), die auf dem Werkstück aus nichtrostendem Stahl gebildet worden ist, unter Verwendung des sehr reinen Aluminiums (6) als Füllmaterial.

2. Verfahren nach Anspruch 1, worin die Phasen des Aufspritzens ein Glasplasmagemisch verwenden, das einen Teil Wasserstoff auf zehn Teile Stickstoff enthält.

3. Verfahren nach Anspruch 1, worin das Pulvergemisch Aluminium und Nickel enthält.

4. Verfahren nach irgendeinem der Ansprüche 1 bis 3, dadurch gekennzeichnet, daß es außerdem die Phase der elektrolytischen Abscheidung eines dünnen Nickelüberzuges (7) auf die Schweißzone der beiden Werkstücke umfaßt.

## Claims

1. A method of welding an aluminium object to a stainless stell object, comprising the steps of:
flame spraying the surface (1) of the stainless steel object to be welded with a powder mixture including a major proportion of a metal having a high melting point e. g. as that of nickel, and a minor proportion of aluminium to form a thin film undercoat (3);
flame spraying the surface of said undercoat (3) with a layer of very pure aluminum (4); and
welding the aluminium object (2) to the aluminum layer (4) on the stainless object using very pure aluminum (6) as a filler.

2. A method according to claim 1, wherein said flame spraying steps use a plasma gas mixture including one part of hydrogen and ten parts of nitrogen.

3. A method according to claim 1, wherein said powder mixture includes aluminum and nickel.

4. A method according any of claims 1 to 3, further comprising the step of electroplating the bonded end portions of both objects with a thin film of nickel (7).

FIG. 1

FIG. 2